# EUROPÄISCHE PATENTSCHRIFT

(11) **EP 3 632 728 B1**
(45) Veröffentlichungstag und Bekanntmachung des Hinweises auf die Patenterteilung: **31.03.2021**
(21) Anmeldenummer: 19196469.1
(22) Anmeldetag: 10.09.2019
(51) Int. Cl.: B60K 1/00, B60K 17/08, B60K 17/02

(54) **ELEKTRISCHER ACHSANTRIEB MIT PLANETENGETRIEBE UND ZWEI GÄNGEN**
ELECTRIC AXLE DRIVE WITH PLANETARY GEAR AND TWO GEARS
ENTRAINEMENT D'ESSIEU ÉLECTRIQUE POURVU D'ENGRENAGE PLANÉTAIRE ET DEUX VITESSES

(30) Priorität: 26.09.2018 DE 102018216506
(43) Veröffentlichungstag der Anmeldung: 08.04.2020
(73) Patentinhaber: Magna PT B.V. & Co. KG, 74199 Untergruppenbach (DE)
(72) Erfinder: AMATO, Marco, 71069 Sindelfingen (DE); NUFFER, Cedric, 74072 Heilbronn (DE); RUPP, Steffen, 71711 Steinheim (DE); RÜHLE, Günter, 74369 Löchgau (DE); SEHIC, Stevens, 71732 Tamm (DE)
(74) Vertreter: Rausch, Gabriele

(56) Entgegenhaltungen:
- WO-A1-2011/082707
- WO-A1-2012/007031
- WO-A1-2014/033060
- DE-A1-102015 208 355

## Beschreibung

Die Erfindung betrifft einen elektrischen Achsantrieb für ein Kraftfahrzeug, mit einer Elektromaschine zum Antreiben mindestens einer Abtriebswelle der Achse des Kraftfahrzeugs, sowie mit einem Stirnradgetriebe.

### Stand der Technik

Ein derartiger elektrischer Achsantrieb ist aus der WO 2011/076542 A1 bekannt. Der elektrische Achsantrieb weist eine elektrische Maschine auf, deren Ausgangswelle parallel zur Achse des Kraftfahrzeugs verläuft. Das Drehmoment der Elektromaschine wird auf ein auf der Achse angeordnetes Differential über eine vorgeschaltete Getriebestufe in Form eines einstufigen Stirnradgetriebes eingeleitet. Zusätzlich ist eine Torque-Vectoring-Einheit vorgesehen, die auf eine Vorgelegestufe wirkt, sodass radindividuell die Drehmomente innerhalb der Achse verteilbar sind. Die Vorgelegestufe besteht aus zwei gleich dimensionierten, parallel geschalteten leistungsverzweigten Planetengetrieben. Die radindividuelle Verteilung der Drehmomente ist stufenlos über das Drehmoment einer Elektromaschine der Torque-Vectoring-Einheit einstellbar. Den leistungsverzweigenden Planetengetrieben ist eine lastausgleichende Getriebestufe als aktive Stufe in Form eines Planetengetriebes nachgeschaltet, um den durch die leistungsverzweigenden Planetengetriebe geteilten Drehmomentenfluss zum Abtrieb zusammenzuführen.

In der DE 10 2014 117 227 A1 ist ein elektrischer Achsantrieb vorgesehen, wobei dieser zwei Gänge aufweist, wobei mittels der Elektromaschine über zwei Stirnradstufen des Stirnradgetriebes ein Planetengetriebe antreibbar ist, sowie das Planetengetriebe zwischen zwei Gängen umschaltbar ist, wobei im ersten Gang eine Übersetzung im Planetengetriebe geschaltet ist und im zweiten Gang das Planetengetriebe als Block geschaltet ist. Im zweiten Gang, bei dem es sich insbesondere um den Primärgang handelt, befinden sich nur die zwei Stirnradstufen im Leistungsfluss und in Bewegung. Der schaltbare Planetensatz läuft im Block um. Hierdurch lassen sich Wirkungsgradvorteile erzielen. Da der elektrische Achsantrieb in zwei Gängen betrieben werden kann, ist es möglich, das Fahrzeug über einen weiten Geschwindigkeitsbereich rein elektrisch anzutreiben.

Aus der DE 10 2016 223 013 A1 ist ein Getriebe mit einer achsparallel angeordneten elektrischen Maschine bekannt, wobei gangbildende Planetenradsätze angeordnet sind. Die ständige oder schaltbare Verbindung zwischen der elektrischen Maschine und den Planetenradsatzelementen erfolgt über einen mehrstufigen Stellantrieb.

Das Getriebe weist für die unterschiedlichen Planetenradsätze, eine Bremse sowie Kupplungen auf. Diese sind radial zueinander angeordnet, liegen aber axial versetzt, also nicht in derselben radialen Ebene, was Bauraum beansprucht.

Die DE 10 2017 111 051 B3 zeigt eine Antriebsvorrichtung, die rein elektrisch erfolgt und mit der zwei Gänge realisierbar sind. Zur Umsetzung der zwei Gänge ist die elektrische Maschine mit einem ersten Sonnenrad eines ersten Planetengetriebes verbunden. Ein zweites Planetengetriebe wird über einen Planetenträger des ersten Planetengetriebes und eine zweite Sonne angetrieben. Zur Darstellung des ersten Gangs ist der Planetenträger des zweiten Planetengetriebes mit dem Gehäuse verbunden.

Es sind sowohl eine Kupplung als auch eine Bremse vorhanden, die als Lamellenkupplungen ausgebildet werden können. Kupplung und Bremse sind dabei ohne Axialversatz gegeneinander angeordnet.

Aus der DE 10 2015 101 042 A1 ist eine antreibbare Achse bekannt, in die mit zwei Gangstufen betrieben wird. Dazu treibt die elektrische Maschine in das Hohlrad eines ersten Planetengetriebes ein, das wiederum mit einem zweiten. Planetengetriebe über einen Planetenträger in Verbindung steht. Zum Schalten werden keine Lamellenkupplungen verwendet, sondern eine Klauenkupplung und ein Freilauf. Die beiden Bauelemente, die eine Kupplung und eine Bremse darstellen, sind mit Axialversatz zueinander angeordnet.

Aus der DE 10 2017 111 049 A1 ist eine Antriebsvorrichtung bekannt, bei dem die elektrische Maschine mit einem Stirnradsatzes arbeitet. Dabei wird antriebsseitig die elektrische Maschine mit einem Hohlrad eines Planetengetriebes verbunden. Die Bremse und die Kupplung sind mit einem axialen Versatz zueinander angeordnet. Der erste Gang lässt sich durch einfaches Verblocken des Sonnenrads mit dem Gehäuse herstellen.

Aufgabe der vorliegenden Erfindung ist es, einen elektrischen Achsantrieb für ein Kraftfahrzeug der eingangs genannten Art so weiterzubilden, dass ein Fahrzeug über einen weiten Geschwindigkeitsbereich rein elektrisch angetrieben werden kann, bei optimalen Wirkungsgrad des Achsantriebs und einem kompakten Aufbau. Außerdem offenbart WO 2012/007031 A1 einen elektrischen Achsantrieb für ein Kraftfahrzeug, mit einer elektrischen Maschine zum Antreiben mindestens einer Abtriebswelle der Achse des Kraftfahrzeugs, sowie mit einem Stirnradgetriebe, wobei der elektrische Achsantrieb zwei Gänge aufweist, und mittels der elektrischen Maschine über mindestens ein Stirnradgetriebe eine Komponente eines Planetengetriebes treibt, wobei das eine Planetengetriebe zwischen zwei Gängen umschaltbar ist.

### Beschreibung der Erfindung

Die Aufgabe wird gelöst mit einem elektrischer Achsantrieb für ein Kraftfahrzeug, mit einer Elektromaschine zum Antreiben mindestens einer Abtriebswelle der Achse des Kraftfahrzeugs, sowie mit einem Stirnradgetriebe, wobei der elektrische Achsantrieb zwei Gänge aufweist, und mittels der Elektromaschine über mindestens ein Stirnradgetriebe eine Komponente eines Planetengetriebes treibt, wobei das Planetengetriebe zwischen zwei Gängen umschaltbar ist, die durch eine Kombination von radial versetzt angeordneter Bremse und Kupplung mit dem Planetengetriebe realisiert sind, wobei die Bremse und die Kupplung ohne Axialversatz zueinander angeordnet sind.

Durch die Verschachtelung von Bremse und Kupplung und deren Einbau in einer Ebene wird der Achse Antrieb besonders kompakt.

Es ist dabei von Vorteil, dass das Stirnradgetriebe ein Hohlrad des Planetengetriebes treibt und im ersten Gang das Sonnenrad des Planetengetriebes mit dem Gehäuse über die Bremse verbunden ist, wobei im zweiten Gang die Kupplung das Hohlrad des Planetengetriebes mit dem Sonnenrad des Planetengetriebes verbindet.

Ferner ist es von Vorteil, wenn das Stirnradgetriebe ein Hohlrad des Planetengetriebes treibt und im ersten Gang das Sonnenrad des Planetengetriebes mit dem Gehäuse über die Bremse verbunden ist, wobei im zweiten Gang die Kupplung den Planetenträger des Planetengetriebes mit dem Sonnenrad des Planetengetriebes verbindet.

In einer vorteilhaften Ausgestaltung weist die Kupplung einen Lamellenträger auf, der mit dem Sonnenrad drehfest verbunden und radial außerhalb eines Lamellenträgers derselben Kupplung angeordnet ist, der wiederum mit dem Hohlrad drehfest verbunden ist. Das Sonnenrad des Planetengetriebes weist somit eine im Querschnitt u-förmige Ausgestaltung auf.

In dieser Ausgestaltung weist das u-förmige Sonnenrad einen ersten Arm entlang der Achse des Planetengetriebes, einen von der Achse senkrecht weg verlaufenden Bereich und einen zweiten Arm auf, der zum ersten Arm radial beabstandet ist.

In einer besonders hoch integrierten Ausführungsform sind die Lamellensätze für Kupplung und Bremse beide am zweiten Arm des Sonnenrads angebracht.

In dieser Ausführungsform erstreckt sich der Lamellensatz für die Kupplung am zweiten Arm des Sonnenrads sich radial nach innen und der Lamellensatz für die Bremse radial nach außen.

In einer alternativen Ausführungsform erstreckt sich der Lamellensatz für die Bremse am zweiten Arm des Sonnenrads radial nach außen und der Lamellensatz für die Kupplung am ersten Arm des Sonnenrads ebenfalls radial nach außen.

In einer weiteren vorteilhaften Ausführung weist der zweite Arm zwei radial voneinander beabstandete Lamellenträger auf. Ferner ist es vorteilhaft, wenn die beiden Lamellenträger des zweiten Arms mit einer Nabe drehverbunden, insbesondere verschweißt sind, wobei die Nabe mit dem Sonnenrad form- oder kraftschlüssig verbunden, insbesondere auf das Sonnenrad aufgepresst ist. Die beiden Lamellenträger des Sonnenrads können im Schnitt L-förmig und parallel zueinander ausgebildet sein.

Dabei ist vorteilhaft, dass der äußerer Lamellenträger den Lamellensatz für die Bremse stützt und der innerer Lamellenträger den Lamellensatz für die Kupplung stützt.

Die erfinderische Lösung erlaubt einen einfachen Aufbau, wobei zumindest das Planetengetriebe, die Kupplung und der äußere Lamellenträger des Sonnenrads als eine Baugruppe vormontiert in ein Gehäuse eingebaut sind.

Es ist von Vorteil, dass das Planetengetriebe über mehrere Nadellager abgestützt ist, wobei die Nadellager nur im ersten Gang drehend belastet sind.

### Beschreibung der Figuren

Figur 1 zeigt eine erste erfinderische Ausführungsform,
Fig. 2 zeigt eine alternative Ausführungsform,
Fig. 3 zeigt eine Ausführung mit speziellem Sonnenrad
Fig. 4 zeigt eine Ausführung mit Lagerung.

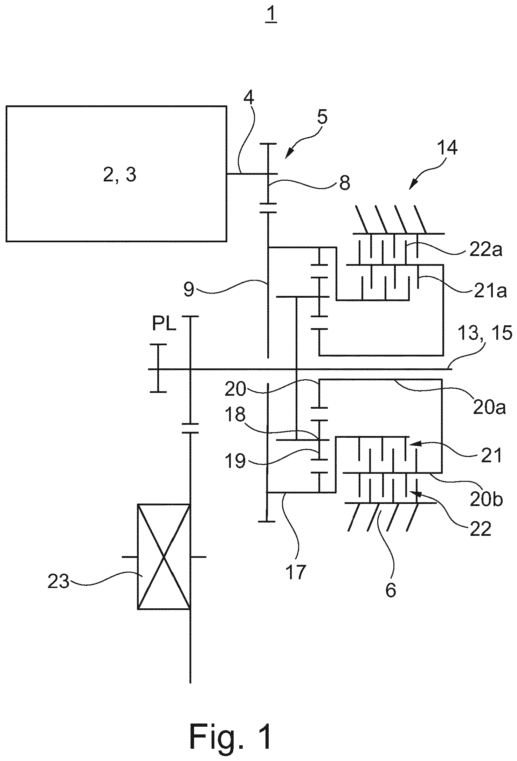

Fig. 1 veranschaulicht, betreffend das erste Ausführungsbeispiel, den grundsätzlichen Aufbau des elektrischen Achsantriebs 1. Gezeigt ist eine elektrische Maschine 2 mit deren Rotor 3 und einen damit verbundenen Rotorwelle 4. Diese wirkt mit einem Stirnradgetriebe 5 zusammen, das ein kleines Stirnrad 8 aufweist, das drehfest mit der Rotorwelle 4 verbunden ist und mit einem großen Stirnrad 9 kämmt. Das Stirnrad 9 ist mit einem Hohlrad 17 verbunden. Das Stirnrad 9 rotiert im Betrieb der Elektromaschine 2 um eine Achse 13, die gleichzeitig eine Mittenachse eines Planetengetriebes 14 darstellt, das mittels der Elektromaschine 2 antreibbar ist.

Diese Achse 13 bzw. Mittenachse 13 stellt auch die Rotationsachse einer Abtriebswelle 15 des elektrischen Antriebs 1 dar, wobei die Abtriebswelle dem Antrieb der Achse des Kraftfahrzeugs dient.

Das Planetengetriebe 14 weist ein Hohlrad 17, in einem Planetenträger 18 gelagerte Planetenräder 19 und ein Sonnenrad 20 auf. Das Stirnrad 9 der Stirnradstufe 5 ist mit dem Hohlrad 17 verbunden. Die Planetenräder 19 kämmen mit dem Hohlrad 17 und dem Sonnenrad 20. Mittels des den Ausgang des Planetengetriebes 14 bildenden Planetenträgers 18 ist die Abtriebswelle 15 antreibbar.

Das Sonnenrad weist eine, im Schnittbild u-förmige Ausgestaltung auf, wobei sich das Sonnenrad 20 in einem ersten Arm 20a zunächst entlang der Achse 13 in der Figur nach rechts erstreckt, dann von der Achse 13 senkrecht weg verläuft und dann einen zweiten Arm 20b beabstandet von der Achse 13 nach links ausbildet. Auf dem zweiten Arm 20b des Sonnenrads sind Komponenten sowohl für eine Kupplung 21 als auch für eine Bremse 22 angeordnet, die das Sonnenrad 20 mit dem Gehäuse 6 verbindet. Der zweite Arm 20b des Sonnenrads 20 ist als Lamellenträger ausgebildet und trägt sowohl einen Lamellensatz 21a für die Kupplung 21, der sich in Richtung auf die Achse 13 erstreckt, als auch einen sich von der Achse 13 nach außen erstreckenden Lamellensatz 22a für die Bremse 22.

Die Kupplung 21 und die Bremse 22 sind koaxial, aber ohne axialen Versatz zueinander angeordnet. Durch die Anordnung der Lamellensätze, sowohl des Lamellensatzes 21a als auch des Lamellensatzes 22 a, am Sonnenrad kann die Auslegung der Lamellensätze optimiert werden. Der Vorteil dieser Anordnung liegt darin, dass bei der Übertragung von hohen Drehmomentwerten das aufzubringende Stützmoment an der Kupplung 21 kleiner ist als das aufzubringende Stützmoment der Bremse 22. Der elektrische Achsantrieb 1 weist zwei Gänge auf. Im ersten Gang ist die Bremse 22 zum Blockieren des Sonnenrads 20 geschlossen und die Kupplung 21 zum Kuppeln von Sonnenrad 20 und Hohlrad 17 geöffnet. Die Bremse 22 und die Kupplung 21 werden über einen gemeinsamen Aktuator oder getrennte Aktuatoren, die nicht in der Figur gezeigt sind, geschaltet.

Im zweiten Gang ist die Bremse 22 zum Blockieren des Sonnenrads 20 geöffnet und die Kupplung 21 zum Kuppeln von Sonnenrad 20 und Hohlrad 17 geschlossen.

Im ersten Gang ist das Sonnenrad 20 festgelegt, sodass der Momentenfluss von der aus Stirnrad 9 und Hohlrad 17 gebildeten Einheit über die Planetenräder 19 in den Planetenträger 18 und von dort zu der Abtriebswelle 15 erfolgt. Im zweiten Gang hingegen, der hauptsächlich im Fahrbetrieb genutzt wird, ist das Planetengetriebe 14 als Block geschaltet.

Der Abtrieb des eingeleiteten Antriebsmoments wird über den Planetenträger 18 und der Abtriebswelle 15 hin zum Differential 23 abgeleitet.

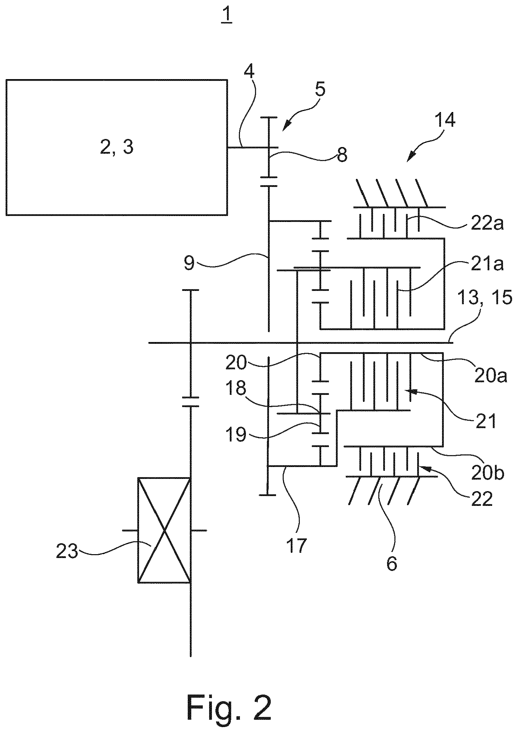

Die Ausführungsform nach Figur 2 unterscheidet sich durch die Lage der Lamellensätze 21a und 22a. Das Sonnenrad 20 weist in dieser Ausführungsform dieselbe u-förmige Ausgestaltung mit zwei Armen 20a und 20b auf. Allerdings sind die Lamellen 21a für die Kupplung 21 auf dem ersten Arm 20a des Sonnenrads angeordnet, wobei die Lamellen 22a der Bremse 22 auf dem zweiten Arm 20b des Sonnenrades angebracht sind. Durch diese Anordnung wird bei gleichbleibendem Antriebsmoment ein größeres bzw. gleiches Stützmoment an der Kupplung 21 als an der Bremse 22 benötigt.

In dieser Ausführungsform treibt die Stirnradstufe 5 ein Hohlrad 17 des Planetengetriebes 14. Im ersten Gang ist das Sonnenrad 20 des Planetengetriebes 14 mit dem Gehäuse 6 über die Bremse 22 verbunden, wobei im zweiten Gang die Kupplung 21 den Planetenträger 18 des Planetengetriebes 14 mit dem Sonnenrad 20 des Planetengetriebes 14 verbindet.

Auch in dieser Anordnung liegen die Bremse 22 und die Kupplung 21 in derselben Ebene und weisen zueinander keinen axialen Versatz auf. Diese bauliche Ausgestaltung ermöglicht eine sehr kompakte Bauweise des erfindungsgemäßen Antriebs.

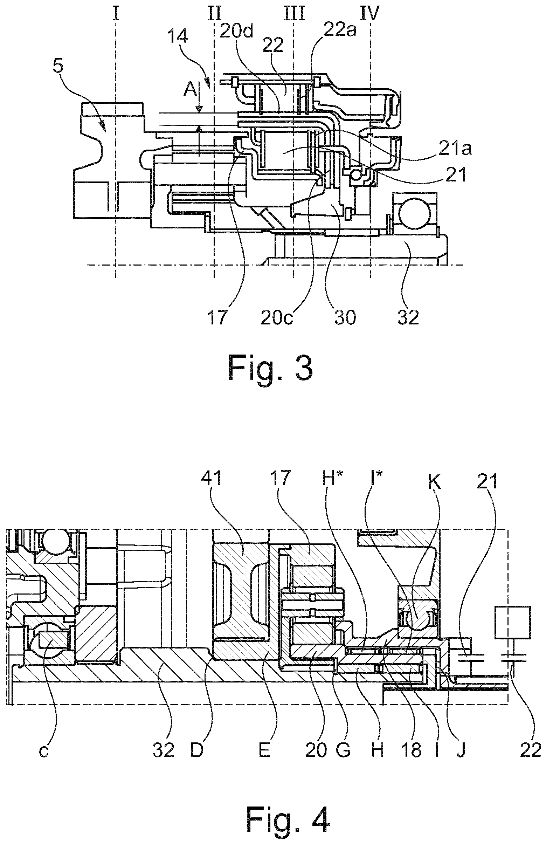

Eine weitere Ausführungsform ist in der Figur 3 skizziert. Dabei wird das Sonnenrad 20 so aufgebaut, dass eine Nabe 30 ausgebildet ist, an der die zwei Lastschaltelemente, nämlich die Lamellenträger 20c und 20d der Lamellensätze 21a und 22a gemeinsam zusammengeführt werden.

Die beiden Lamellenträger 20c erstrecken sich zunächst von der Nabe aus radial nach außen und knicken unter einem 90° Winkel zu einem parallelen Arm 20d ab.

Die beiden Lamellenträger 20 c und 20d verlaufen dabei über ihre gesamte Länge parallel zueinander mit einem vorbestimmten Abstand A.

Die Lamellenträger 20c und 20d stellen dabei den Innenlamellenträger der Bremse 22 sowie den Außenlamellenträger der Kupplung 21 dar. Sie werden gemeinsam auf die Nabe 30 geführt und dort verschweißt. Die Nabe 30 stellt über eine Passverzahnung also eine form- oder kraftschlüssige Verbindung zum Sonnenrad her.

Da zwischen den beiden Lamellenträgern 20c und 20d ein Abstand A und somit ein Freiraum besteht, kann sich das radial durchströmende Kühlöl nach dem Durchfluss durch die Kupplung gut verteilen und radial zur Bremse 22 fließen.

Zudem sind die Lamellenträger 20c durch die Aufteilung der Lamellensätze nur einseitig belastet und einfacher herstellbar.

Das Stirnradgetriebe 5, das Planetengetriebe 14, die Kupplung 21 (inklusive der Bremse 22) und die Aktuatoren für die Kupplung und die Bremse sind jeweils axial benachbart entlang einer Zwischenwelle 32 angeordnet. Die Reihenfolge der Komponenten entspricht den Bezeichnungen I, II, III und IV in der Figur 3, wobei durch I, II, III, IV Ebenen definiert werden, in denen die Komponenten wie zuvor beschrieben hauptsächlich angeordnet sind.

Fig. 4 zeigt eine Lagerung der erfindungsgemäßen Lösung, wobei hier die Bremse 22 und Kupplung 21 nur schematisch gezeigt sind.

Der Aufbau des elektrischen Achsantriebs erfolgt dabei so, dass zuerst der Radsatz des Getriebes 1 mit der Kupplung und dem Innenlamellenträger der Bremse zu einer Baugruppe vormontiert wird und mit den Gehäuseteilen komplett verschlossen wird.

Anschließend erfolgt die Montage der Bremse 22 und deren Anbau an dem Gehäuse 6. Im nächsten Schritt wird die Baugruppe mit dem Radsatz und der Kupplung in das Gehäuse eingebracht. Durch diesen Aufbau ist das erfindungsgemäße Getriebe einfach zu montieren und in einem Servicefall leichter für Reparaturen zugänglich.

Um das erfindungsgemäße Getriebe optimal zu betreiben ist ein Lagerkonzept vorgesehen. Dabei ist ein Schaltrad 41 auf einer Zwischenwelle 32 an der Position C mit einem Festlager, einem Rillenkugellager an den Positionen D und E schwimmend gelagert. Die schwimmende Lagerung an den Positionen D und E kann auch eine angestellte Lagerung mit Rillenkugellagern oder Schrägkugellagern sein. Alternativ ist auch eine Lösung mit Nagellagern, Rollenhülsen und Anlaufscheiben oder Axialnadellagern möglich.

Die beiden Axiallager G und J nehmen Kräfte aus dem Sonnenrad 20 und der Kupplung 22 auf. Axialkräfte die vom Sonnenrad 20 in Richtung Planetenträger 18 geleitet werden, nimmt das Festlager K auf. Die axiale Kraft, in der Figur nach rechts, wird über ein Lager J, der Planetenträger 18 und ein Festlager K in das Gehäuse geleitet. Axialkräfte in Richtung Planetengetriebe, in der Figur nach links, werden über das Lager G, den Planetenträger 18, die Abtriebswelle und das Festlager C in das Gehäuse geleitet.

Dem mehrteiligen Pilotlager, das mit Nadellagern H und I, sowie H* und I* ausgeführt ist kommt eine zentrale Bedeutung zu.

Wird das Getriebe im ersten Gang betrieben, ist das Sonnenrad 20 festgesetzt. Es besteht eine Drehzahldifferenz zwischen Planetenträger 18 und Sonnenrad 20

Im zweiten Gang des Getriebes, in dem sich der Antrieb hauptsächlich befindet, bewegen sich sowohl Sonnenrad 20 als auch die Zwischenwelle 32 und der Planetenträger 18 mit derselben Drehzahl, sodass das mehrteilige Pilotlager stark entlastet ist.

### Bezugszeichen

1 Achsantrieb
2 elektrische Maschine
3 Rotor
4 Rotorwelle
5 Stirnradgetriebe
6 Gehäuse
8 kleines Stirnrad
9 großes Stirnrad
13 Achse
14 Planetengetriebe
15 Abtriebswelle
17 Hohlrad
18 Planetenträger
19 Planetenräder
20 Sonnenrad
20 a Erster Arm
20 b Zweiter Arm
20 c Lamellenträger
20 d Lamellenträger
21 Kupplung
21 a Lamellensatzes
22 Bremse
22 a Lamellensatzes
23 Differenzial
A Abstand
30 Nabe
32 Zwischenwelle

## Patentansprüche

1. Elektrischer Achsantrieb (1) für ein Kraftfahrzeug, mit einer elektrischen Maschine (2) zum Antreiben mindestens einer Abtriebswelle (15) der Achse des Kraftfahrzeugs, sowie mit einem Stirnradgetriebe (5), wobei der elektrische Achsantrieb (1) zwei Gänge aufweist, und mittels der elektrischen Maschine (2) über mindestens ein Stirnradgetriebe (5) eine Komponente eines Planetengetriebes (14) treibt, wobei das eine Planetengetriebe (14) zwischen zwei Gängen umschaltbar ist, die durch eine Kombination von radial versetzt angeordneter Bremse (22) und Kupplung (21) mit dem einen Planetengetriebe (14) realisiert sind, wobei die Bremse (22) und die Kupplung (21) ohne Axialversatz zueinander angeordnet sind und das Stirnradgetriebe (5) ein Hohlrad (17) des einen Planetengetriebes (14) treibt und im ersten Gang das Sonnenrad (20) des Planetengetriebes (14) mit dem Gehäuse (6) über die Bremse (22) verbunden ist.

2. Elektrischer Achsantrieb (1) nach Anspruch 1, **dadurch gekennzeichnet, dass** im zweiten Gang die Kupplung (21) das Hohlrad des Planetengetriebes (14) mit dem Sonnenrad (20) des Planetengetriebes (14) verbindet.

3. Elektrischer Achsantrieb (1) nach Anspruch 1, **dadurch gekennzeichnet, dass** im zweiten Gang die Kupplung (21) den Planetenträger (18) des Planetengetriebes (14) mit dem Sonnenrad (20) des Planetengetriebes (14) verbindet.

4. Elektrischer Achsantrieb (1) nach Anspruch 1 oder 2, **dadurch gekennzeichnet, dass** die Kupplung (21) einen Lamellenträger aufweist, der mit dem Sonnenrad (20) drehfest verbunden und radial außerhalb eines Lamellenträgers derselben Kupplung (21) angeordnet ist, der wiederum mit dem Hohlrad (17) drehfest verbunden ist.

5. Elektrischer Achsantrieb (1) nach einem der vorhergehenden Ansprüche, **dadurch gekennzeichnet, dass** das Sonnenrad (20) des Planetengetriebes (14) eine im Querschnitt u-förmige Ausgestaltung aufweist.

6. Elektrischer Achsantrieb (1) nach Anspruch 5, **dadurch gekennzeichnet, dass** das u-förmige Sonnenrad (20) einen ersten Arm (20a) entlang der Achse (13) des Planetengetriebes (14), einen von der Achse (13) senkrecht weg verlaufenden Bereich und einen zweiten Arm (20b) aufweist, der zum ersten Arm (20a) radial beabstandet ist.

7. Elektrischer Achsantrieb (1) nach Anspruch 6, **dadurch gekennzeichnet, dass** Lamellensätze (21a, 22a) für die Kupplung (21) und die Bremse (22) am zweiten Arm (20b) des Sonnenrads angebracht sind.

8. Elektrischer Achsantrieb (1) nach Anspruch 7, **dadurch gekennzeichnet, dass** der Lamellensatz (21a) für die Kupplung (21) am zweiten Arm (20b) des Sonnenrads (20) sich radial nach innen und der Lamellensatz (22a) für die Bremse (22) radial nach außen erstrecken.

9. Elektrischer Achsantrieb (1) nach einem der Ansprüche 1 bis 6, **dadurch gekennzeichnet, dass** sich der Lamellensatz (21a) für die Kupplung(21) am zweiten Arm (20b) des Sonnenrads (20) sich radial nach außen und der Lamellensatz (22a) für die Bremse (22) am ersten Arm (20a) des Sonnenrads (20) radial nach außen erstrecken.

10. Elektrischer Achsantrieb (1) nach einem der vorhergehenden Ansprüche, **dadurch gekennzeichnet, dass** der zweite Arm (20b) zwei radial voneinander beabstandete Lamellenträger (20c,20d) aufweist.

11. Elektrischer Achsantrieb (1) nach Anspruch 10, **dadurch gekennzeichnet, dass** die beiden Lamellenträger (20c,20d) des zweiten Arms mit einer Nabe (30) drehverbunden, sind, wobei die Nabe (30) mit dem Sonnenrad (20) form- oder kraftschlüssig verbunden ist.

12. Elektrischer Achsantrieb (1) nach Anspruch 11, **dadurch gekennzeichnet, dass** die beiden Lamellenträger (20c,20d) des Sonnenrads (20) im Schnitt L-förmig und parallel zueinander ausgebildet sind.

13. Elektrischer Achsantrieb (1) nach einem der Ansprüche 1 bis 12, **dadurch gekennzeichnet, dass** der äußere Lamellenträger (20d) den Lamellensatz (22a) für die Bremse (22) stützt und der innere Lamellenträger (20c) den Lamellensatz (21a) für die Kupplung (21) stützt.

14. Elektrischer Achsantrieb (1) nach einem der vorhergehenden Ansprüche, **dadurch gekennzeichnet, dass** zumindest das Planetengetriebe (14), die Kupplung (21) und der äußere Lamellenträger des Sonnenrads (20) als eine Baugruppe vormontiert in ein Gehäuse (6) eingebaut sind.

15. Elektrischer Achsantrieb (1) nach einem der vorhergehenden Ansprüche, **dadurch gekennzeichnet, dass** das Planetengetriebe (14) über mehrere Nadellager (H, I, H*,I*) abgestützt ist, wobei die Nadellager (H,I,H*,I*) nur im ersten Gang drehend belastet sind.

## Claims

1. Electric axle drive (1) for a motor vehicle, having an electric machine (2) for driving at least one drive shaft (15) of the axle of the motor vehicle, as well as a spur gear unit (5), wherein the electric axle drive (1) has two gears and by means of the electric machine (2) drives a component of a planetary gear (14) by way of at least one spur gear unit (5), wherein the one planetary gear (14) is able to be shifted between two gears which are implemented by a combination of a brake (22) and a clutch (21) being radially offset to the one planetary gear (14), wherein the brake (22) and the clutch (21) are mutually disposed without any axial offset and the spur gear unit (5) drives a ring gear (17) of the one planetary gear (14), and the sun gear (20) of the planetary gear (14) in the first gear is connected to the housing (6) by way of the brake (22).

2. Electric axle drive (1) according to Claim 1, **characterized in that** the clutch (21) in the second gear connects the ring gear of the planetary gear (14) to the sun gear (20) of the planetary gear (14).

3. Electric axle drive (1) according to Claim 1, **characterized in that** the clutch (21) in the second gear connects the planetary carrier (18) of the planetary gear (14) to the sun gear (20) of the planetary gear (14).

4. Electric axle drive (1) according to Claim 1 or 2, **characterized in that** the clutch (21) has a plate carrier which is connected in a rotationally fixed manner to the sun gear (20) and is disposed so as to be radially outside a plate carrier of the same clutch (21), the latter plate carrier in turn being connected in a rotationally fixed manner to the ring gear (17).

5. Electric axle drive (1) according to one of the preceding claims, **characterized in that** the sun gear (20) of the planetary gear (14) has a design embodiment which in the cross section is U-shaped.

6. Electric axle drive (1) according to Claim 5, **characterized in that** the U-shaped sun gear (20) along the axle (13) of the planetary gear (14) has a first arm (20a), a region that runs perpendicularly away from the axle (13), and a second arm (20b) which is radially spaced apart from the first arm (20a).

7. Electric axle drive (1) according to Claim 6, **characterized in that** plate sets (21 a, 22a) for the clutch (21) and the brake (22) are attached to the second arm (20b) of the sun gear.

8. Electric axle drive (1) according to Claim 7, **characterized in that** the plate set (21a) for the clutch (21) on the second arm (20b) of the sun gear (20) extends radially inwards, and the plate set (22a) for the brake (22) extends radially outwards.

9. Electric axle drive (1) according to one of Claims 1 to 6, **characterized in that** the plate set (21a) for the clutch (21) on the second arm (20b) of the sun gear (20) extends radially outwards, and the plate set (22a) for the brake (22) on the first arm (20a) of the sun gear (20) extends radially outwards.

10. Electric axle drive (1) according to one of the preceding claims, **characterized in that** the second arm (20b) has two plate carriers (20c, 20d) that are radially spaced apart from one another.

11. Electric axle drive (1) according to Claim 10, **characterized in that** the two plate carriers (20c, 20d) of the second arm are connected in a rotationally fixed manner to a hub (30), wherein the hub (30) is connected in a form-fitting or force-fitting manner to the sun gear (20).

12. Electric axle drive (1) according to Claim 11, **characterized in that** the two plate carriers (20c, 20d) of the sun gear (20) in the cross section are configured so as to be L-shaped and parallel to one another.

13. Electric axle drive (1) according to one of Claims 1 to 12, **characterized in that** the outer plate carrier (20d) supports the plate set (22a) for the brake (22), and the inner plate carrier (20c) supports the plate set (21a) for the clutch (21).

14. Electric axle drive (1) according to one of the preceding claims, **characterized in that** at least the planetary gear (14), the clutch (21) and the outer plate carrier of the sun gear (20) as a pre-assembled functional group are installed in a housing (6).

15. Electric axle drive (1) according to one of the preceding claims, **characterized in that** the planetary gear (14) is supported by a plurality of needle bearings (H, I, H*, I*), wherein the needle bearings (H, I, H*, I*) are stressed in a rotating manner only in the first gear.

## Revendications

1. Entraînement d'essieu électrique (1) pour un véhicule automobile, comprenant une machine électrique (2) pour entraîner au moins un arbre entraîné (15) de l'essieu du véhicule automobile, ainsi qu'un réducteur à engrenage droit (5), l'entraînement d'essieu électrique (1) présentant deux vitesses et entraînant au moyen de la machine électrique (2) un composant d'un engrenage planétaire (14) par l'intermédiaire d'au moins un réducteur à engrenage droit (5), ledit un engrenage planétaire (14) pouvant changer entre deux vitesses qui sont réalisées par une combinaison d'un frein (22) disposé de manière radialement décalée et d'un embrayage (21) avec ledit un engrenage planétaire (14), dans lequel le frein (22) et l'embrayage (21) sont disposés sans décalage axial l'un par rapport à l'autre, et le réducteur à engrenage droit (5) entraîne une couronne (17) dudit un engrenage planétaire (14), et en première vitesse, la roue solaire (20) de l'engrenage planétaire (14) est reliée au carter (6) par l'intermédiaire du frein (22).

2. Entraînement d'essieu électrique (1) selon la revendication 1, **caractérisé en ce qu'**en deuxième vitesse, l'embrayage (21) relie la couronne de l'engrenage planétaire (14) à la roue solaire (20) de l'engrenage planétaire (14).

3. Entraînement d'essieu électrique (1) selon la revendication 1, **caractérisé en ce qu'**en deuxième vitesse, l'embrayage (21) relie le porte-satellites (18) de l'engrenage planétaire (14) à la roue solaire (20) de l'engrenage planétaire (14).

4. Entraînement d'essieu électrique (1) selon la revendication 1 ou 2, **caractérisé en ce que** l'embrayage (21) présente un support de disques qui est relié à la roue solaire (20) de manière verrouillée en rotation et disposé radialement à l'extérieur d'un support de disques du même embrayage (21), qui est à son tour relié à la couronne (17) de manière verrouillée en rotation.

5. Entraînement d'essieu électrique (1) selon l'une quelconque des revendications précédentes, **caractérisé en ce que** la roue solaire (20) de l'engrenage planétaire (14) présente une configuration ayant une forme de U en section transversale.

6. Entraînement d'essieu électrique (1) selon la revendication 5, **caractérisé en ce que** la roue solaire en forme de U (20) présente un premier bras (20a) le long de l'axe (13) de l'engrenage planétaire (14), une zone s'éloignant verticalement de l'axe (13), et un deuxième bras (20b) qui est radialement espacé par rapport au premier bras (20a).

7. Entraînement d'essieu électrique (1) selon la revendication 6, **caractérisé en ce que** des jeux de disques (21a, 22a) pour l'embrayage (21) et le frein (22) sont montés sur le deuxième bras (20b) de la roue solaire.

8. Entraînement d'essieu électrique (1) selon la revendication 7, **caractérisé en ce que** le jeu de disques (21a) pour l'embrayage (21) sur le deuxième bras (20b) de la roue solaire (20) s'étend radialement vers l'intérieur, et le jeu de disques (22a) pour le frein (22) s'étend radialement vers l'extérieur.

9. Entraînement d'essieu électrique (1) selon l'une quelconque des revendications 1 à 6, **caractérisé en ce que** le jeu de disques (21a) pour l'embrayage (21) sur le deuxième bras (20b) de la roue solaire (20) s'étend radialement vers l'extérieur, et le jeu de disques (22a) pour le frein (22) sur le premier bras (20a) de la roue solaire (20) s'étend radialement vers l'extérieur.

10. Entraînement d'essieu électrique (1) selon l'une quelconque des revendications précédentes, **caractérisé en ce que** le deuxième bras (20b) présente deux supports de disques (20c, 20d) radialement espacés l'un de l'autre.

11. Entraînement d'essieu électrique (1) selon la revendication 10, **caractérisé en ce que** les deux supports de disques (20c, 20d) du deuxième bras sont reliés à un moyeu (30) de manière verrouillée en rotation, le moyeu (30) étant relié à la roue solaire (20) par complémentarité de forme ou par adhérence.

12. Entraînement d'essieu électrique (1) selon la revendication 11, **caractérisé en ce que** les deux supports de disques (20c, 20d) de la roue solaire (20) sont réalisés en parallèle l'un à l'autre et ont en coupe une forme de L.

13. Entraînement d'essieu électrique (1) selon l'une quelconque des revendications 1 à 12, **caractérisé en ce que** le support de disques (20d) extérieur soutient le jeu de disques (22a) pour le frein (22), et le support de disques (20c) intérieur soutient le jeu de disques (21a) pour l'embrayage (21).

14. Entraînement d'essieu électrique (1) selon l'une quelconque des revendications précédentes, **caractérisé en ce qu'**au moins l'engrenage planétaire (14), l'embrayage (21) et le support de disques extérieur de la roue solaire (20) sont prémontés sous forme de sous-ensemble et installés dans un carter (6).

15. Entraînement d'essieu électrique (1) selon l'une quelconque des revendications précédentes, **caractérisé en ce que** l'engrenage planétaire (14) est soutenu par l'intermédiaire de plusieurs roulements à aiguilles (H, I, H*, I*), les roulements à aiguilles (H, I, H*, I*) étant sollicités en rotation en première vitesse seulement.
